# DEMANDE DE BREVET EUROPEEN

(11) **EP 0 986 952 A2**
(43) Date de publication de la demande: **22.03.2000**
(21) Numéro de dépôt: 99460056.7
(22) Date de dépôt: 20.09.1999
(51) Int. Cl.: A01K 45/00

(54) **Machine de ramassage de volailles vivantes au sol**

(30) Priorité: 18.09.1998 FR 9811827
(71) Demandeur: Le Piouffle, Georges, 56120 Josselin (FR); Carrée, Francis, F-22600 Loudeac (FR)
(72) Inventeur: Le Piouffle, Georges, 56120 Josselin (FR); Carrée, Francis, F-22600 Loudeac (FR)

(57) **Abrégé**

Machine pour le ramassage des volailles vivantes au sol et leur dépôt dans des caisses de conteneurs caractérisé en ce qu'il comprend une fourche montée sur un engin de manutention, comportant un bâti (1) portant un ensemble de doigts (3) à écartement variable d'un diamètre sensiblement identique et sensiblement souple, ayant à l'extrémité opposée de leur fixation une pointe en matière souple pour éviter les blessures sur les animaux.

## Description

La présente invention se rapporte à une machine de ramassage de Volailles Vivantes au sol et leur dépôt dans des caisses de conteneurs. Pour effectuer ces opérations, de nombreux dispositifs ont été conçus à en juger par le rapport de recherche du 15 Novembre 1991, suite à la demande du brevet français numéro 9103986 du 28 Mars 1991 et au dépôt d'un nouveau dispositif de ramassage le 27 Septembre 1996 numéro 9612026, rapport de recherche international du 2 Janvier 1998. Les inconvénients entre autre étaient leur faible débit, car les abattoirs demandent une certaine cadence de ramassage pour l'alimentation de leurs chaînes d'abattage. A ce jour, ce travail très pénible est effectué manuellement. Les éleveurs demandent également qu'une machine de ramassage soit d'une simplicité d'entretien et de nettoyage pour éviter les problèmes sanitaires entre les différents élevages. Pour remédier à ces différents inconvénients des dispositifs connus, la présente invention consiste en une fourche attelée à un engin de manutention pour le ramassage des animaux vivants et leurs dépôts dans des caisses de conteneurs. La dite fourche est dans un mode de réalisation avantageux constitué d'au moins deux parties munies chacunes d'un élément de pesage pour le contrôle.

Selon une importante caractéristique de l'invention, la fourche de ramassage possède des doigts à écartement variable, d'un diamètre sensiblement identique sur toute leur longueur et sensiblement souple pour épouser les dénivellations du terrain. Ces doigts, comme dans le précédent dépôt de brevet, ne comportent plus de talons à l'extrémité opposée de leur fixation, mais une pointe en matière souple qui évite les blessures constatées sur les animaux dans le précédent système.

Pour ne pas perdre d'animaux contenus sur la fourche lors des déplacements, des volets mobiles sont disposés de chaque côté et à la partie avant. Le volet fixé à l'avant, se lève indépendamment des volets des côtés lors du déchargement des animaux dans des caisses de conteneurs. Ces différents volets mobiles à mouvement sensiblement vertical sont commandés par chaînes ou câbles, leur donnant une grande souplesse à la fermeture évitant une compression sur les animaux.

Selon une autre importante caractéristique de l'invention, sur la partie avant de la fourche est fixée une poutrelle mobile à mouvement sensiblement horizontal, équipée de doigts souples, chaînes ou autres ayant pour but par leurs contacts sur les animaux couchés au sol, de les faire se soulever avant la pénétration des doigts sous leurs corps, suivant les espèces d'animaux à ramasser, cette poutrelle équipée de doigts souples ou de chaînes, peut être remplacée par un ensemble rotatif à axe horizontal muni de ces différents doigts souples pour soulever les animaux couchés sur le sol.

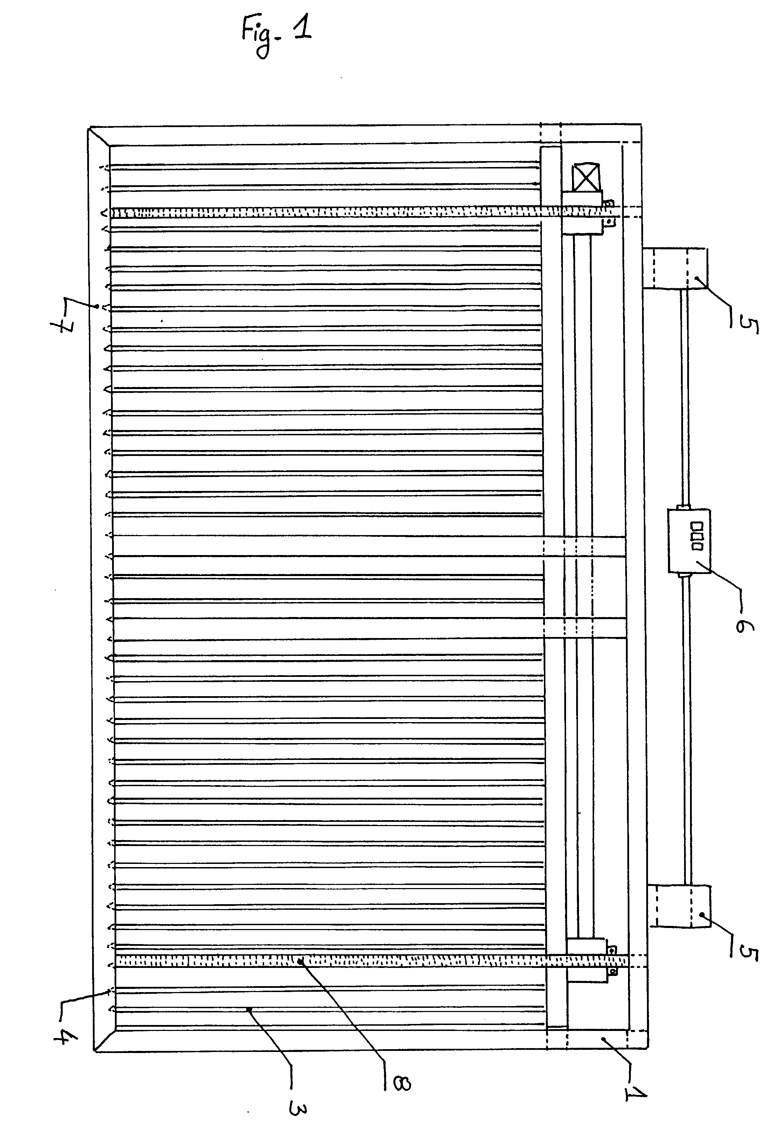

Etant donné la grande différence d'animaux à ramasser, d'autres caractéristiques et avantages de l'invention ressortiront de la description ci-après, des exemples de réalisation non limitatif de l'invention. La figure 1 représente , pour ne pas charger les dessins, une vue de dessus d'une fourche de ramassage des animaux au sol selon l'invention avec les doigts.

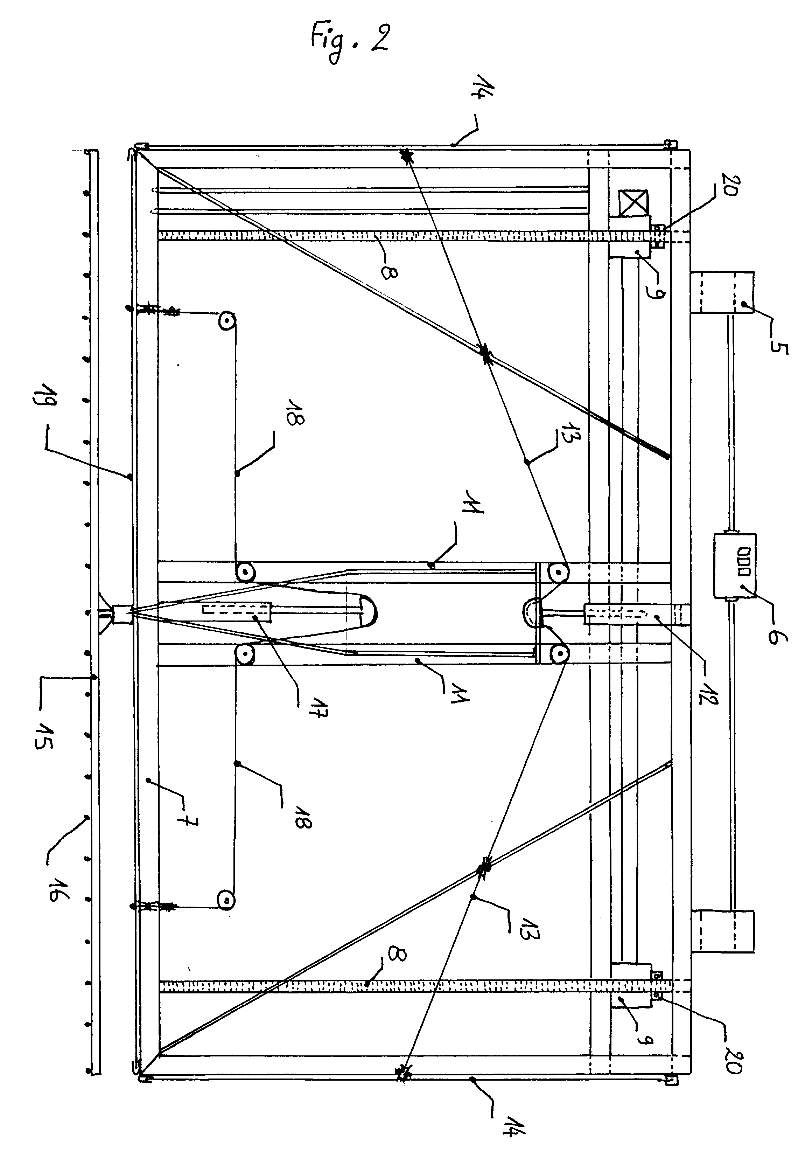

La figure 2 représente une autre vue de dessus selon l'invention avec les mécanismes de commande du volet, de pousser des animaux sur les doigts et les fermetures des volets sur les côtés et l'avant de la fourche.

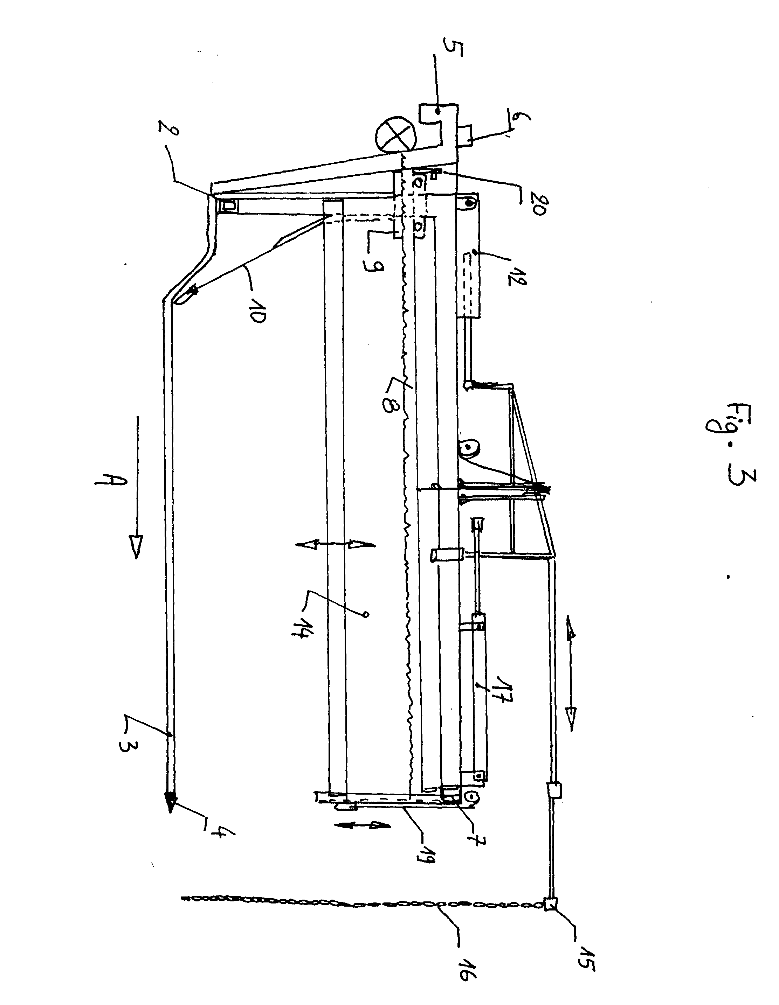

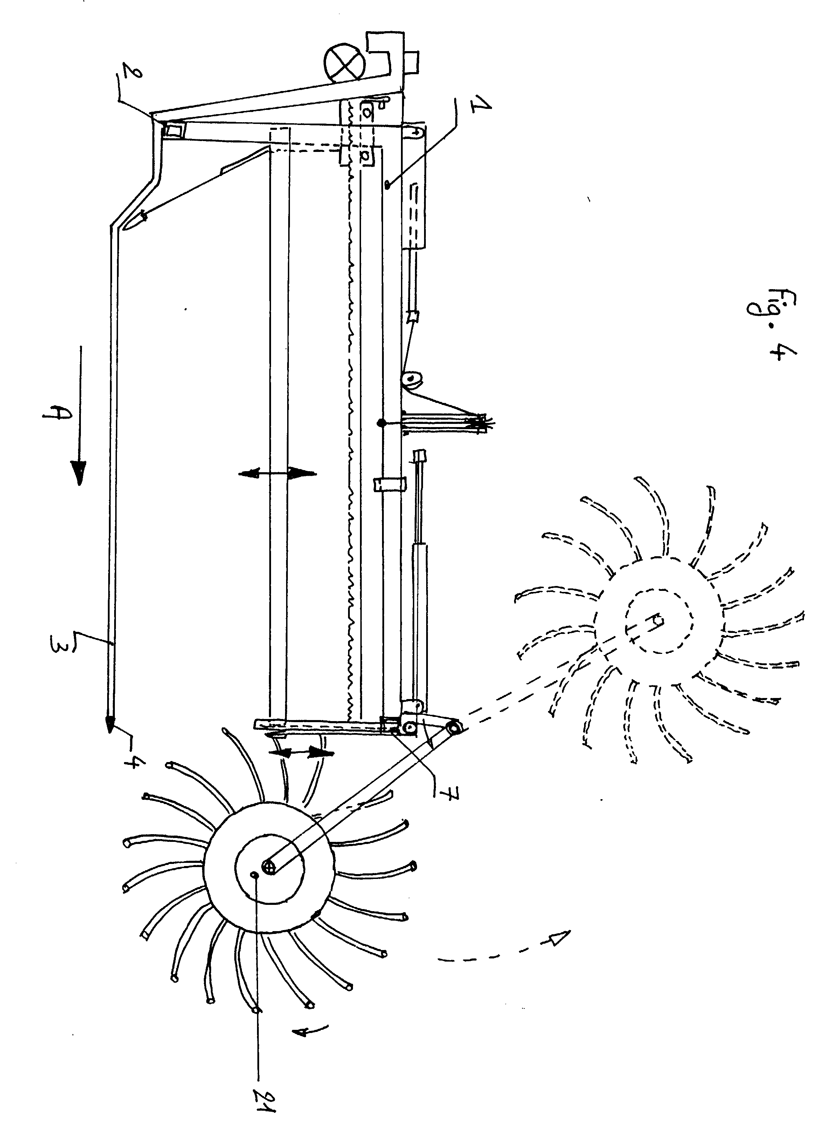

La figure 3 représente schématiquement une coupe verticale du dispositif de ramassage selon l'invention. La figure 4 représente schématiquement une vue de côté selon l'invention d'un ensemble rotatif équipé de doigts souples pour soulever les animaux couchés au sol.

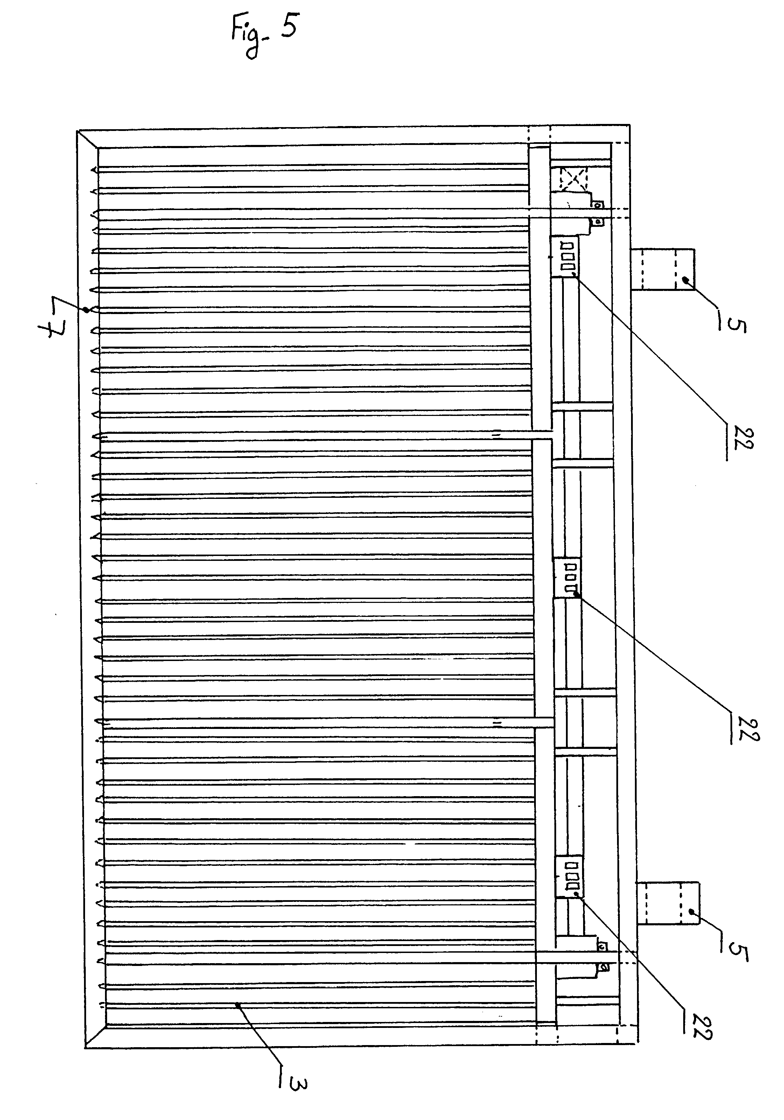

La figure 5 représente une vue de dessus de la fourche en trois parties équipées chacune de leur appareil de pesée (22).

Tel qu'il est représenté sur la figure 1, le dispositif de ramassage selon l'invention comporte un bâti (1) réalisé au moyen de poutrelles. Ce bâti (1) possède à sa base la poutrelle (2) où sont fixés les doigts (3) à écartements variables suivant l'espèce d'animaux à ramasser, sensiblement souples pour épouser les déformations du sol et d'un diamètre sensiblement identique sur toute leur longueur, à l'extrémité opposée à leur fixation, ces doigts (3) sont munis d'une pointe (4) en matière souple pour éviter les blessures sur les animaux. Le bâti (1) est équipé de plots (5) de fixation à un engin de manutention non représenté.

Pour renseigner le conducteur sur la quantité d'animaux ramassés sur la fourche, un appareil de pesée (6) est intercalé entre le bâti (1) et l'engin de manutention non représenté.

Ce bâti (1) comporte en sa partie supérieure des poutrelles (7) qui supportent des crémaillères (8) où se déplacent des chariots (9) relié à un volet mobile (10) ayant pour objet la fermeture arrière de la fourche et par son déplacement vers l'avant au dessus des doigts (3) de vider les animaux du dispositif de ramassage dans des caisses de conteneurs.

Sur des crémaillères (8) sont disposées des butées mobiles (20) pour obtenir la quantité d'animaux souhaitée sur la fourche.

Sur des poutrelles (7) du bâti (1) sont fixés les supports (11) maintenant les vérins (12) qui, par son action mécanique sur les câbles (13), commandent l'ouverture et la fermeture sensiblement verticale des volets (14) sur les côtés droit et gauche de la fourche, et le mouvement sensiblement horizontal d'avance et de recul de la poutrelle (15) supportant les tiges ou chaînes (16) par leur contact sur les animaux couchés au sol et de les faire se soulever avant la pénétration des doigts (3) sous leurs corps.

Le vérin (17) solidaire des poutrelles (11) commande par les câbles (18) l'ouverture et la fermeture sensiblement verticale du volet (19) à l'avant de la fourche.

Tel qu'il est représenté sur la figure (4), la machine de ramassage selon l'invention est fixé sur des poutrelles (7) du bâti (1) en remplacement de la poutrelle (15) où sont fixés des doigts ou chaînes souples (16) un ensemble rotatif (21) escamotable au moment de la poussée des animaux dans des caisses de conteneurs. La flèche A donne le sens d'avancement au sol de la fourche de ramassage.

## Revendications

1. Machine de ramassage de volailles vivantes au sol et leur dépôt dans des caisses de conteneurs caractérisé en ce qu'il comporte une fourche, attelée à un engin de manutention, équipée de doigts (3) à écartement variable, d'un diamètre sensiblement identique sur toute leur longueur et sensiblement souple pour épouser les dénivellations du terrain, possédant également à l'extrémité de leurs fixations une pointe en matière souple, des volets mobiles à mouvement sensiblement vertical étant disposés de chaque côté et à la partie avant.

2. Machine selon la revendication 1 caractérisée en ce que le volet de la partie avant se lève indépendamment des volets des côtés.

3. Machine selon la revendication 1 caractérisée en ce que le bâti (1) comporte en sa partie supérieure des poutrelles (7) qui supportent des crémaillères (8) où se déplacent des chariots (9) relié à un volet mobile (10) ayant pour objet la fermeture arrière de la fourche et permettant, par son déplacement vers l'avant au dessus des doigts (3), de vider les animaux du dispositif de ramassage dans des caisses de conteneurs.

4. Machine selon la revendication 1 caractérisée en ce que sur la partie supérieure à l'avant de la fourche est fixée une poutrelle mobile à mouvement sensiblement horizontal équipée de doigts souples, chaînes ou autres ayant pour but dans leur contact sur les animaux couchés au sol et les faire se soulever avant la pénétration des doigts de fourche sous les animaux.

5. Machine selon la revendication 1 caractérisée en ce qu'elle comporte un ensemble rotatif à axe horizontal muni de doigts souples pour soulever les animaux couchés sur le sol, avant la pénétration des doigts de fourche sous les animaux

6. Machine selon la revendication 1 caractérisée en ce que la fourche peut-être divisée en au moins 2 parties équipées chacune d'un appareil de pesée.

7. Machine selon l'une quelconque des revendications précédentes caractérisée en ce que les différents volets mobiles sont commandés mécaniquement par chaînes ou câbles leur donnant une grande souplesse à la fermeture évitant la compression des animaux.

8. Machine selon la revendication 3 caractérisée en ce que des butées mobiles (20) sont disposées sur des crémaillères (8) pour obtenir la quantité d'animaux souhaitée sur la fourche.
